Europäisches Patentamt

European Patent Office

Office européen des brevets

(11) Veröffentlichungsnummer: **0 463 211 A1**

## EUROPÄISCHE PATENTANMELDUNG

(21) Anmeldenummer: **90112212.7**

(22) Anmeldetag: **27.06.90**

(51) Int. Cl.5: **B09B 3/00**, E02D 3/11,
E21B 7/20, E21B 7/26,
E21B 43/30, E21C 9/00,
F23G 7/06

(43) Veröffentlichungstag der Anmeldung:
**02.01.92 Patentblatt 92/01**

(84) Benannte Vertragsstaaten:
**AT BE CH DE DK ES FR GB GR IT LI LU NL SE**

(71) Anmelder: **Ruhrkohle Aktiengesellschaft**
**Rellinghauser Strasse 1**
**W-4300 Essen 1(DE)**

(72) Erfinder: **Kaewert, Klaus**
**Gänsestr. 4**
**W-4000 Düsseldorf(DE)**
Erfinder: **Krischke, Hermann**
**Ostpreussenstr. 37**
**W-4300 Essen 15(DE)**

(54) **Bodenreinigung.**

(57) Nach der Erfindung wird beim thermischen In-Situ-Sanieren von kohlenwasserstoffverseuchtem Erdreich eine Verdrängungsbohrung zur Anwendung gebracht, bei der kein separat zu behandelndes Bohrklein anfällt. Kassetten (1) werden auf und in das Erdreich (5) gesetzt. Jede Kassette (1) ist mit Kragen (6) versehen die zur Halterung und Führung von Verdrängungskörpern (7) dienen.

FIG.1

Die Erfindung betrifft die In-Situ-Reinigung von insbesondere kohlenwasserstoffverseuchtem Erdreich durch Erwärmung, wobei Bohrungen in das Erdreich eingebracht werden und das Erdreich von dort ausgehend erwärmt wird.

Zu den Stoffen, mit denen Erdreich am häufigsten kontaminiert ist, gehören Kohlenwasserstoffe. Solche Kohlenwasserstoffe sind bei bestimmten Industrien, z.B. Kokereien, Raffinerien, Tankstellen, KFZ-Verwerter, in der Vergangenheit in mehr oder weniger starkem Umfang in der Umgebung freigesetzt worden. Auch wenn das bei neuzeitlichen Anlagen vermieden wird, sind damit jedoch noch eine Vielzahl sogenannter Altlasten gegeben. Bei den kontaminierten Standorten besteht die Gefahr, gesundheitschädigender, austretender Gase und die Gefahr von Grundwasserverschmutzungen. Deshalb wird bei einer Vielzahl dieser Altlasten eine Bodensanierung als notwendig angesehen. Es sind diverse Sanierungsverfahren vorgeschlagen worden. Dabei wird zwischen On-Site-Verfahren und In-Situ-Verfahren sowie sonstigen Verfahren und der Deponierung unterschieden.

Das Aufnehmen kontaminierten Erdreiches und Aufhalden auf einer Sondermülldeponie bedarf keiner Erläuterung. Eine Vielzahl von sonstigen Verfahren und On-Site-Verfahren basieren auf einer Behandlung des aufgenommenen Gutes. Die Behandlung des kontaminierten Erdreiches kann chemisch und/oder thermisch erfolgen. Thermische Verfahren sind seit einiger Zeit erprobt. Dabei wird das aufgenommene Gut soweit erwärmt, daß die in der Regel leicht flüchtigen Kohlenwasserstoffe verdampfen und ausgetrieben werden.

Die anfallenden Brüden werden gesammelt und mittels einer Nachverbrennung unschädlich gemacht.

Bei allen On-Site-Verfahren stellt sich das Problem der Vereinbarkeit mit dem Abfallbeseitigungsrecht. Der aufgenommene Boden ist Abfall. Nach dem Abfallbeseitigungsrecht ist für die Behandlung an Ort und Stelle - auch mittels mobiler Anlagen - ein Planfeststellungsverfahren durchzuführen. Erfahrungen haben gezeigt, daß bei einem solchen Planfeststellungsverfahren von den Anliegern eine Vielzahl von Einsprüchen zu erwarten sind. Mit diesen Einsprüchen und dem sich anschließenden Verwaltungsstreit verzögert sich die Sanierungsmaßnahme um einen nicht absehbaren Zeitraum.

Die Verbringung des ausgehobenen Erdreiches zu einer genehmigten Anlage ist nur dann eine gangbare Alternative, wenn das behandelte Erdreich nicht zurückgeführt werden muß, sondern an anderer Stelle verbleiben kann. Bei diesem Weg ergeben sich zusätzlich zum Ausheben und zur Behandlung des Erdreiches noch erhebliche Kosten durch Transport und Endlagerung des gewonnenen Erdreiches. Das gilt vor allem, wenn das behandelte Erdreich noch als Sondermüll eingestuft wird.

Vor obigem Hintergrund haben die In-Situ-Verfahren erheblich an Bedeutung gewonnen. Bei diesen Verfahren verbleibt das Erdreich an Ort und Stelle. Es werden Bohrungen gesetzt und durch die Bohrungen hindurch Behandlungsmedien ins Erdreich eingebracht. Bei den Verfahren, die Lösungsmittel bzw. Laugen ins Erdreich einbringen, stellt sich dann das Problem, daß

- das Grundwasser nicht zusätzlich belastet wird,
- nach der Behandlung sämtliches Behandlungsmittel aus dem Erdreich entfernt wird

Obige Probleme sind noch nicht zufriedenstellend gelöst. Nach einem älteren Vorschlag (DE-OS 3716275.6) wird als Behandlungsmittel nur Wärme ins Erdreich eingebracht. Dieser Vorschlag basiert auf der Überlegung, daß die ins Erdreich eingedrungenen Kohlenwasserstoffe relativ flüchtig sind. Durch Erwärmung können die Kohlenwasserstoffe als Brüden wieder aus dem Erdreich ausgetrieben werden. Es wurde ermittelt, daß eine Temperatur von 600 Grad Celsius ausreichend ist, um kohlenwasserstoffverseuchtes Erdreich zu sanieren.

Bei der thermischen In-Situ-Behandlung ist der Wärmefluß von der Einbringungsbohrung von entscheidender Bedeutung. Versuche mit Kies und Sand zeigen, daß das Erdreich extrem schlechte Wärmeleitfähigkeit besitzt. Dies wird u.a. bei der Betrachtung des Verhaltens von Formsanden in Gießereien deutlich. Formsande haben eine solche Isolierungswirkung, daß die Wärmebelastung einer noch flüssigen Stahlschmelze schon in einem Abstand von einem halben Meter von der Schmelze kaum noch feststellbar ist.

Eine ausreichende thermische In-Situ-Behandlung von kohlenwasserstoffverseuchtem Erdreich setzt deshalb voraus, daß Bohrungen für die Einleitung von Wärme nacheinander in ganz geringen Abständen gesetzt werden. Dadurch stellt sich das Problem, daß eine erhebliche Menge an Bohrklein anfällt. Diese Menge ist so groß, daß eine Verbringung auf eine Deponie wirtschaftlich kaum noch sinnvoll ist. Nach einem älteren Vorschlag soll das Bohrklein deshalb in einen Behälter gefördert werden und dort in gleicher Weise wie bei der In-Situ-Behandlung thermisch behandelt werden. Diese thermische Behandlung soll in einem auf dem Gelände aufgestellten Gerät erfolgen. Sie unterliegt jedoch wiederum den eingangs erläuterten Genehmigungsschwierigkeiten nach dem Abfallrecht.

Der Erfindung liegt daher die Aufgabe zugrunde, das vorgeschlagene ältere Verfahren zur thermischen In-Situ-Behandlung von kohlenwasserstoffverseuchtem Erdreich so weiterzubilden, daß diese Schwierigkeiten vermieden werden. Der Erfindung liegt dabei auch der Gedanke zugrunde, zwei Verfahrenswege zu vermeiden und es bei einem Verfahrensweg zu belassen, nämlich der thermischen In-Situ-Behandlung.

Nach der Erfindung wird das durch Herstellung der notwendigen Bohrungen in Form einer Verdrängungsbohrung erreicht. Dabei wird das Erdreich durch ein pfahlartiges Bohrwerkzeug zur Seite hin verdrängt. Es entsteht kein Aushub mehr. Darüber hinaus hat das mit dem Verdrängen verbundene Verdichten des Umgebungserdreiches beträchtliche Verfahrensvorteile. Es entsteht eine dichte Packlage des Erdreiches mit sehr viel besserem Wärmeleitwert als ohne Verdrängung. Ferner wird dadurch die Standfestigkeit der Bohrlochwände verbessert. Eine merkliche Beeinträchtigung des Ausgasungsverhaltens entsteht jedoch nicht. Das Erdreich hat auch mit Verdrängungsbohrungen noch so viel Porenvolumen, daß gasförmige Kohlenwasserstoffe leicht nach oben hin austreten können.

Der erfindungsgemäße Verdrängungskörper besitzt wahlweise eine eingebaute oder eine hinten angesetzte Rüttel- oder Rammeinrichtung. Von Vorteil ist die Verwendung hohler Verdrängungskörper, die nach ihrem Einrammen und/oder Einrütteln für die Dauer der thermischen Behandlung im Erdreich verbleiben. Es ist günstig, solche Verdrängungskörper mit einem lösbaren Rüttel- bzw. Rammwerkzeug zu versehen. Das Rüttel- bzw. Rammwerkzeug wird nach Einbringen eines Verdrängungskörpers auf den nächsten Verdrängungskörper umgesetzt.

Ein weiterer Vorteil dieser Verfahrensweise ist, daß stabile Bohrungen entstehen und nach Einbringen einer jeden Bohrung durch nachfolgende Verdrängungsarbeit eine allseitige Berührung der Verdrängungskörper vom Umgebungserdreich gewährleistet ist. Durch die Berührung wird der Wärmeübergang gegenüber einem Wärmeübergang durch einen Spalt beträchtlich verbessert.

In weiterer Ausbildung der Erfindung wird das thermisch zu behandelnde Erdreich in dem Bereich, in dem mit Gasaustritt aufgrund thermischer Behandlung zu rechnen ist, abgedeckt. Zur Abdeckung sind Stahlplatten geeignet. Die Stahlplatten können mit Seitenwänden versehen werden, mit denen sie ins Erdreich eindringen. Die Seitenwände verhindern ein unerwünschtes seitliches Austreten der Brüden in die Umgebung.

Die Stahlplatten werden nach ihrer Positionierung miteinander verschraubt oder in sonstiger Weise befestigt, so daß sie eine geschlossene, dichte Abdeckung bilden.

Die Stahlplatten sind mit Öffnungen zum Anschluß von Gasabsaugleitungen versehen. Wahlweise sind jeweils zwei Öffnungen oder mehr vorgesehen, an denen die Stahlplatten untereinander über Rohrbögen verbunden werden können, um auf diesem Wege ein geschlossenes, die Platten einbindendes Rohrsystem herstellen zu können. Das Rohrsystem führt dann zu einer Brennkammer, in der die austretenden Brüden bei Temperaturen von über 1000 Grad Celsius verbrannt werden.

Wahlweise sind die Platten auch einzeln absaugbar. Vorzugsweise befindet sich dann in jeder von einer Platte ausgehenden Leitung ein Gassensor und ein Absperrschieber. Mittels des Gassensors läßt sich feststellen, ob nach einer üblichen Behandlungsdauer noch Gasaustritt zu verzeichnen ist. Nach Beendigung des Gasaustritts kann der Absperrschieber geschlossen, die Wärmezufuhr zu der zu dieser Stahlplatte gehörenden Verdrängungsbohrung eingestellt und nach Erkalten die Platte und der Verdrängungskörper demontiert werden.

Wahlweise sind die Platten zugleich mit Durchtrittsöffnungen für die Verdrängungskörper versehen. Die Öffnungen bilden eine Zentrierung und Führung für die Verdrängungskörper bei deren Niederbringen. Die Öffnungen können mittig in den Stahlplatten sein, sie können jedoch auch im Bereich der Stoßstelle zweier Stahlplatten liegen. Das hat den zusätzlichen Vorteil, daß die Fuge zwischen Verdrängungskörper und Stahlplatten nach dem Niederbringen der Verdrängungskörper durch Verspannen der Stahlplatten geschlossen werden kann.

Vorzugsweise sind alle Fugen und Öffnungen mit Dichtschnüren versehen, um einen Austritt von Brüden in die Umgebung zu verhindern und die im Betrieb auftretende Wärmedehnung zu kompensieren. Eine besondere Sicherheit gegen Austritt von Brüden entsteht, wenn unter den Stahlplatten ein geringer Unterdruck erzeugt wird. Leckstellen an den Fugen der Stahlplatten haben dann nicht die Gefahr eines Austritts der Brüden sondern eine gewünschte Luftansaugung zur Folge.

Die anfallende Brüdenmenge ist relativ gering. Die Brüden können in einer thermischen Muffel verbrannt werden, die elektrisch oder mit Gas/Öl beheizt ist. Die Beheizung ist von Vorteil, um trotz schwankenden Gasanfalls bzw. Brüdenanfalls eine gleichbleibende Muffeltemperatur zu sichern. Unmittelbar vor der Muffel wird Verbrennungsluft zudosiert. Auf diesem Wege wird ein minimales Gasvolumen bei der Nachverbrennung erzeugt. Die austretenden Gase werden mittels nachgeschalteter Wärmetauscher gekühlt, ggf. gewaschen oder einer anderen Rauchgasreinigung unterzogen und danach gereinigt ins Freie gegeben. Der vorgesehene Wärmetauscher kann ggf. zur Vorwärmung der Verbrennungsluft genutzt werden. Das Waschwasser der Rauchgaswäschen wird aufbereitet und rezirkuliert, damit Abwasserfreiheit gewährleistet ist.

Der den Unterdruck bewirkende Verdichter bzw. das Gebläse ist hinter den Wärmetauscher bzw. hinter der Rauchgasreinigung angeordnet.

In der Zeichnung sind zwei Ausführungsbeispiele der Erfindung dargestellt.

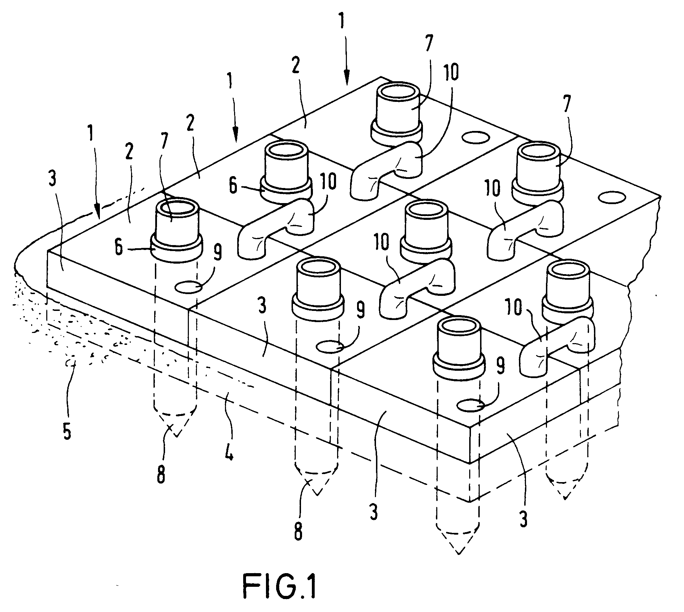

Figur 1 zeigt eine Anzahl von Kassetten 1, die flächendeckend nebeneinander auf und in das Erdreich gesetzt worden sind. Jede Kassette 1 besitzt eine Stahlplatte 2 und umlaufende Wände 3. Die umlaufenden Wände 3 sind mit einem Maß 4 in das Erdreich 5 eingedrückt. Das Eindrücken verhindert, daß bei einer Erwärmung des Erdreiches 5 Brüden, die unterhalb der Stahlplatten 2 austreten, seitlich in die Umgebung entweichen können.

Jede Kassette 1 ist an der Stahlplatte 2 außerdem mit Eintrittsöffnungen und Kragen 6 versehen. Die Kragen 6 dienen der Halterung und Führung von Verdrängungskörpern 7. Bei den Verdrängungskörpern 7 handelt es sich um Stahlrohre mit einer vorn angeformten Spitze 8.

Im übrigen besitzt jede Kassette 1 zwei Anschlußöffnungen 9. Diese Anschlußöffnungen 9 sind für eine Einzelabsaugung und/oder Sammelabsaugung geeignet. Eine Sammelabsaugung ist in Figur 1 dargestellt. Dabei sind die einzelnen Kassetten durch Rohrbögen 10 miteinander verbunden.

Die einzelnen Kassetten 1 sind in den Berührungsflächen ähnlich wie Spundbohlen mit Nut-Feder-Verbindungen versehen, so daß sie ineinander geführt werden können. Das erleichtert das Positionieren der Kassetten. Nach dem Setzen der Kassetten und Eindrücken ins Erdreich werden die Kassetten miteinander durch Schrauben verspannt.

Nach dem Verspannen werden die Verdrängungskörper 7 in die Flansche 6 eingeführt und mittels einer Rammeinrichtung ins Erdreich gedrückt. Als Rammeinrichtung können solche Geräte verwendet werden, wie sie für das Rammen von Spundbohlen üblich sind. Dabei ist es zweckmäßig, die Rammeinrichtung mit einer Rohreinnspannung zu versehen, wie sie an Werkzeugmaschinen zum Spannen von Rohren üblich ist. Derartige Spanneinrichtungen besitzen mindestens drei auf einem Radius gleichmäßig bewegbare Spannbacken. Mit Hilfe einer solchen Spanneinrichtung kann gewährleistet werden, daß die Rammeinrichtung das Verdrängungswerkzeug 7 genau mittig eintreibt.

Die Kontamination des nach Figur 1 zur Sanierung vorgesehenen Erdreiches reicht Z.B. bis in eine Tiefe von 3 m. Dementsprechend besitzen die Verdrängungskörper 7 eine Länge von etwa 3 m. Die Rohre werden bis unter die Stahlplatte 2 eingetrieben. Anschließend werden nicht dargestellte Brenner durch die Öffnungen der Kragen 6 hindurch auf die offenen Rohrenden aufgesetzt. Dabei wird die Platte 2 völlig verschlossen.

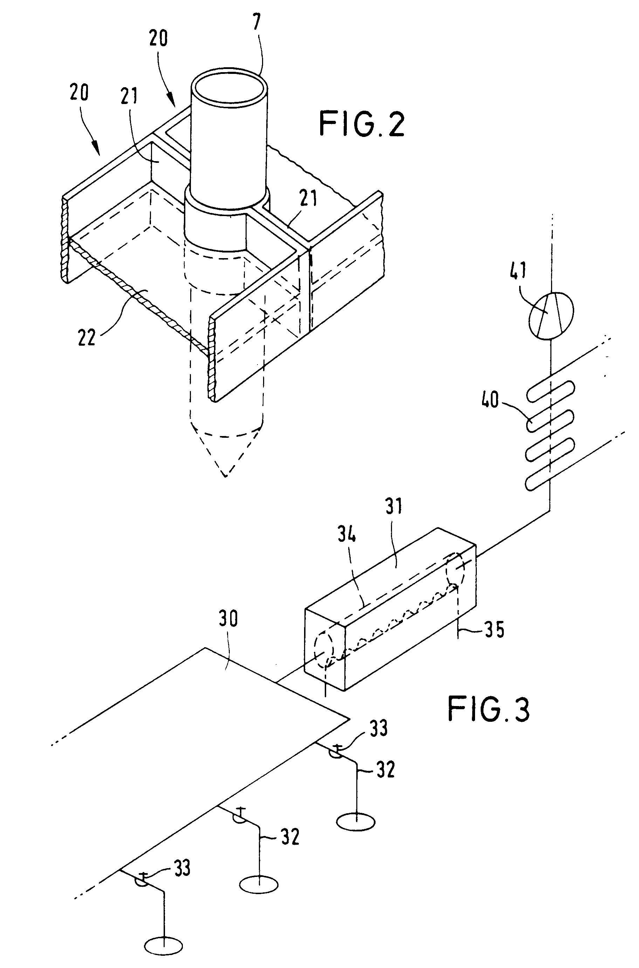

Figur 2 zeigt Kassetten 20, bei denen die Verdrängungskörper 7 im Fugenbereich der Kassetten 20 eingebracht werden. Dazu sind die mit 21 bezeichneten Wände im Bereich der Verdrängungskörper 7 halbkreisförmig. Der Vorteil der Ausführungsform nach Figur 2 ist die Möglichkeit, die Rohre im Fugenbereich zwischen den Wänden 21 einzuspannen. Desgleichen kann die Spannmöglichkeit genutzt werden, um den erwähnten Brenner einzuspannen.

Ferner ist in Figur 2 gezeigt, daß die Wände 21 der Kassetten 20 sich oberhalb und unterhalb der mit 22 bezeichneten Stahlplatte erstrecken. Dies erleichtert die Verspannung der Kassetten.

Zur thermischen Behandlung wird in den Verdrängungskörpern 7 eine Atmosphäre mit einer Temperatur von ca. 900 Grad Celsius erzeugt. Diese Wärme breitet sich von den Verdrängungskörpern in das Erdreich. Wenn sich die von den Verdrängungskörpern ausgehenden Erwärmungsfronten treffen ist noch eine Temperatur von 600 Grad Celsius gewährleistet. Durch die Erwärmung werden die vorhandenen Kohlenwasserstoffe ausgetrieben.

Figur 3 zeigt eine Gasabsaugung mit einer Verrohrung 30, die in einen Brenner 31 mündet. Zur Verrohrung 30 gehören Einzelabzweigungen 32 mit nicht dargestellten Gasmeßsonden und Absperrschiebern 33. Die Einzelabzweigungen 32 führen zu den Kassetten 2 bzw. 20.

Der Brenner 31 besitzt ein langgestrecktes Keramikrohr, das z.B. elektrisch beheizt ist. Das Keramikrohr ist strichpunktiert bei 34 dargestellt, die Beheizung bei 35. Das Keramikrohr wird mit der elektrischen Beheizung auf einer Temperatur von 1500 Grad Celsius gehalten. Infolge dieser Temperatur wird anströmendes Gas aus der Gasabsaugung verbrannt. Bei zu geringem Sauerstoffgehalt, wird Verbrennungsluft zudosiert, so daß eine gesicherte Verbrennung der anfallenden Gase stattfindet.

Anstelle des bloßen Keramikrohres mit axialem Gasdurchtritt können auch Keramikmuffeln eingesetzt werden, in die das Gas tangential eingeleitet wird, so daß das Gas spiralförmig durch die Muffel strömt und so bei kürzerer Muffelbaulänge noch ausreichende Verweilzeit in der Muffel hat.

Nach Austritt aus dem Brenner gelangt das Gas in einen Wärmetauscher 40 und/oder in eine nachgeschaltete Gaswäsche.

Hinter dem Wärmetauscher bzw. der Gaswäsche ist die Gastemperatur so gering, daß dort ein Gassaugzuggebläse 41 angeordnet werden kann.

Das Waschwasser wird aufbereitet und rezirkuliert, so daß das Verfahren abwasserlos betrieben werden kann.

**Patentansprüche**

1. In-Situ-Reinigung von Erdreich durch Erwärmung, wobei Bohrungen in das Erdreich eingebracht werden und das Erdreich von dort ausgehend erwärmt wird, dadurch gekennzeichnet, daß die Bohrungen als Verdrängungsbohrungen ausgeführt werden.

2. Verfahren nach Anspruch 1, gekennzeichnet durch einen rohrförmigen Verdrängungskörper (7).

3. Verfahren nach Anspruch 2, gekennzeichnet durch eine eingebaute und/oder aufgesetzte Rüttel- und/oder Rammeinrichtung.

4. Verfahren nach einem oder mehreren der Ansprüche 1 bis 3, dadurch gekennzeichnet, daß mehrere Bohrungen eingebracht und verrohrt werden.

5. Verfahren nach einem oder mehreren der Ansprüche 1 bis 4, gekennzeichnet durch kassettenförmige Abdeckungen (2, 20) des Erdreiches.

6. Verfahren nach Anspruch 5, dadurch gekennzeichnet, daß die Kassetten (2, 20) zugleich die Führung für das Einbringen der Verdrängungskörper (7) bilden.

7. Verfahren nach Anspruch 5 oder 6, gekennzeichnet durch eine Gasabsaugung und eine Abdichtung der Kassetten mit dem Erdreich.

8. Verfahren nach Anspruch 7, gekennzeichnet durch eine nachgeschaltete, beheizte Keramikmuffel als Verbrennungseinrichtung.

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 070 593 (D.J. BLONK) * Seite 1, Zeilen 1-4; Seite 2, Zeile 16 - Seite 3, Zeile 6; Seite 3, Zeilen 31-33; Seite 4, Zeile 37 - Seite 5, Zeile 13; Seite 6, Zeile 32 - Seite 7, Zeile 14; Seite 8, Zeilen 7-23; Figuren 1,2 * | 1-4 | B 09 B 3/00 E 02 D 3/11 E 21 B 7/20 E 21 B 7/26 E 21 B 43/30 E 21 C 9/00 F 23 G 7/06 |
| Y | | 5-7 | |
| Y | GB-A- 23 312 (P.J. HOLMES) * Seite 3, Zeile 7 - Seite 4, Zeile 15; Figuren 1-3 * | 5-7 | |
| X | CH-A- 247 933 (GYSI AG) * Das ganze Dokument * | 1,2,4 | |
| Y | US-A-4 913 065 (K.H. HEMSATH) * Spalte 5, Zeile 18 - Spalte 7, Zeile 56; Figuren 1-3 * | 1-4 | |
| A | | 5,7,8 | |

| | | | RECHERCHIERTE SACHGEBIETE (Int. Cl.5) |
|---|---|---|---|
| Y | DE-A-2 952 593 (H.-D. MOLSNER) * Seite 3, Zeilen 1-4; Seite 4, Zeile 9 - Seite 5, Zeile 7; Seite 8, Zeile 20 - Seite 9, Zeile 14; Patentanpruch 1; Figur 1 * | 1-4 | B 09 B E 02 D E 21 B F 23 G A 01 G |
| E | DE-A-3 916 617 (RUHRKOHLE AG) * Das ganze Dokument * | 1-8 | |
| A | WO-A-8 806 209 (HOLSTEINER GAS GmbH) * Seite 1, Zeile 1 - Seite 3, Zeile 3; Seite 6, Zeile 19 - Seite 7, Zeile 3; Figur 1 * | 1-4 | |

--- -/-

Der vorliegende Recherchenbericht wurde für alle Patentansprüche erstellt

| Recherchenort | Abschlußdatum der Recherche | Prüfer |
|---|---|---|
| DEN HAAG | 19-02-1991 | LAVAL J.C.A |

EPO FORM 1503 03.82 (P0403)

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 318 796  (H. LINN) * Seite 5, Zeile 25 - Seite 6, Zeile 28; Figur * --- | 8 | |
| A,D | DE-A-3 716 275  (WESTFÄLISCHE BERGEWERKSCHAFTSKASSE) --- | | |
| A | WO-A-8 909 664  (BATTELLE) ----- | | |

RECHERCHIERTE
SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| DEN HAAG | 19-02-1991 | LAVAL J.C.A |

EPO FORM 1503 03.82 (P0403)